**Europäisches Patentamt**

**European Patent Office**

**Office européen des brevets**

(19)

(11) Veröffentlichungsnummer: **0 333 170 B1**

# EUROPÄISCHE PATENTSCHRIFT

(12)

(45) Veröffentlichungstag der Patentschrift:
14.08.91 Patentblatt 91/33

(51) Int. Cl.$^5$: **B23H 7/18**

(21) Anmeldenummer: **89104605.4**

(22) Anmeldetag: **15.03.89**

(54) Servosteuervorrichtung für eine Erosionsmaschine.

(30) Priorität: **15.03.88 DE 3808646**

(43) Veröffentlichungstag der Anmeldung:
**20.09.89 Patentblatt 89/38**

(45) Bekanntmachung des Hinweises auf die
Patenterteilung:
**14.08.91 Patentblatt 91/33**

(84) Benannte Vertragsstaaten:
**CH DE FR GB IT LI LU SE**

(56) Entgegenhaltungen:
**DD-A- 123 790**
**PATENT ABSTRACTS OF JAPAN vol. 10, no.**
**311 (M-528) 2367 23 Oktober 1986, & JP-A-61**
**121828 (INOUE JAPAX)**

(73) Patentinhaber: **AG für industrielle Elektronik**
**AGIE Losone bei Locarno**
**CH-6616 Losone/Locarno (CH)**

(72) Erfinder: **Boccadoro, Marco**
**Brogirolo**
**CH-6653 Verscio (CH)**

(74) Vertreter: **EGLI-EUROPEAN PATENT**
**ATTORNEYS**
**Widenmayerstrasse 5**
**W-8000 München 22 (DE)**

**Beschreibung**

Die vorliegende Erfindung betrifft eine Servosteuervorrichtung für eine Erosionsmaschine zum Regeln der Lage einer Erosionselektrode bezüglich eines Werkstückes nach dem Oberbegriff des Patentanspruchs 1.

Eine gattungsgemäße Steuervorrichtung ist bereits aus der DE-A-2250872 bekannt. Bei der bekannten Servosteuervorrichtung wird ein die Lage der Erosionselektrode bezüglich eines Werkstückes anzeigendes Signal erzeugt und mit einem Soll-Signal verglichen. Das sich ergebende Fehlersignal wird einer Tiefpaßfilterschaltung mit fester Grenzfrequenz zugeführt, die ausgangsseitig an eine Treiberschaltung angeschlossen ist, die eine durch einen Elektromotor gebildete Antriebsvorrichtung zum Nachführen der Erosionselektrode mit einem Treiberstrom versorgt. Bei der bekannten Servosteuervorrichtung ermittelt die Einrichtung zum Bestimmen der Ist-Entfernung zwischen der Erosionselektrode und dem Werkstück die Entfernung aus der Zündverzögerungszeit zwischen den Bearbeitungsspannungspulsen und den Bearbeitungsstrompulsen.

Die Frequenz der Bearbeitungspulse kann je nach der gewünschten Arbeitsweise der Erosionsmaschine, wie beispielsweise beim Schruppen oder beim Schlichten vom Megahertzbereich bis in einen Bereich von etwa 10 Hertz verändert werden.

Neben der Variation der Frequenz der Bearbeitungspulse ändert sich auch bei der Erosionsbearbeitung der Wert für den optimalen Abstand zwischen der Erosionselektrode und dem Werkstück in Abhängigkeit von verschiedenen Bearbeitungsparametern, wie beispielsweise der Stromamplitude, der Pulsdauer, der Leerlaufspannung, der Leitfähigkeit der Flüssigkeit im Bearbeitungsspalt und ähnlichen Größen. Mit der Veränderung des Wertes für den optimalen Abstand zwischen der Erosionselektrode und dem Werkstück ändert sich auch die Zeit, innerhalb der bei einer bestimmten Bearbeitungsgeschwindigkeit eine Korrektur von Abstandsabweichungen vom Soll-Wert durchgeführt werden muß.

Somit ändern sich auch bei einer Erosionsbearbeitung mit einer festen vorgegebenen Frequenz die übrigen Randbedingungen für die Bearbeitung, so daß der Regelkreis der bekannten Servosteuervorrichtung mit einer unveränderlichen Regelcharakteristik nicht allen auftretenden Prozeßbedingungen bei der Erosionsbearbeitung in gleicher Weise gerecht werden kann.

Gegenüber diesem Stand der Technik liegt der vorliegenden Erfindung die Aufgabe zugrunde, eine Servosteuervorrichtung der eingangs genannten Art so weiterzubilden, daß die Nachführung der Erosionselektrode der Art des momentanen Erosionsprozesses angepaßt ist.

Diese Aufgabe wird bei einer Steuervorrichtung der im Oberbegriff des Patentanspruchs 1 genannten Art zusammen mit den, im kennzeichnenden Teil des Patentanspruchs 1 angegebenen Merkmale gelöst.

Durch die Anpassung der Grenzfrequenz der Tiefpaßfilterschaltung an wenigstens einen Parameter des Bearbeitungspulses wird das dynamische Verhalten des Regelkreises beim Nachführen der Erosionselektrode den sich ändernden Bedingungen beim Erosionsprozeß gerecht. Mit der erfindungsgemäßen Servosteuervorrichtung wird nicht nur eine höhere Erosionsoberflächenqualität erreicht, sondern auch das Risiko von Werkstückbeschädigungen vermindert.

Eine besonders einfache Möglichkeit der Bestimmung der Ist-Entfernung ist Gegenstand des Anspruchs 2.

Zweckmäßige Parameter für die Beeinflussung der Grenzfrequenz der Tiefpaßfilterschaltung sind Gegenstand der Ansprüche 3 bis 6. Die in den Ansprüchen 7 bis 14 angegebene Ausgestaltung der Zuordnung zwischen dem Fehlersignal und einem Treibersignal für die Antriebseinrichtung zum Nachführen der Erosionselektrode ermöglicht eine schnelle Reaktion des Regelsystemes bei hohen Regelabweichungen bei stabilen Regelcharakteristika im Bereich kleiner Regelfehler.

Eine besonders einfache und kostengünstige Ausgestaltung der Schaltungsstruktur ist Gegenstand der Ansprüche 15 und 16.

Nachfolgend wird unter Bezugnahme auf die beiliegenden Zeichnungen eine bevorzugte Ausführungsform der vorliegenden Erfindung näher erläutert. Es zeigen :

| Fig. 1 | ein Blockdiagramm einer Ausführungsform der Servosteuervorrichtung ; |
|---|---|
| Fig. 2a, 2b | den Verlauf von Erosionsspannung und Erosionsstrom in Abhängigkeit von der Zeit ; |
| Fig. 3a bis 3d | zweckmäßige Abhängigkeiten der Grenzfrequenz von verschiedenen Bearbeitungsparametern ; |
| Fig. 4 | eine Zuordnung des Steuersignales zum Fehlersignal ; |
| Fig. 5a, 5b | eine Darstellung des zeitabhängigen Wechselanteiles des Fehlersignales und der Schwellwerte ; und |
| Fig. 6 | ein Flußdiagramm eines Algorithmus zum Ermitteln von Schwellwerten. |

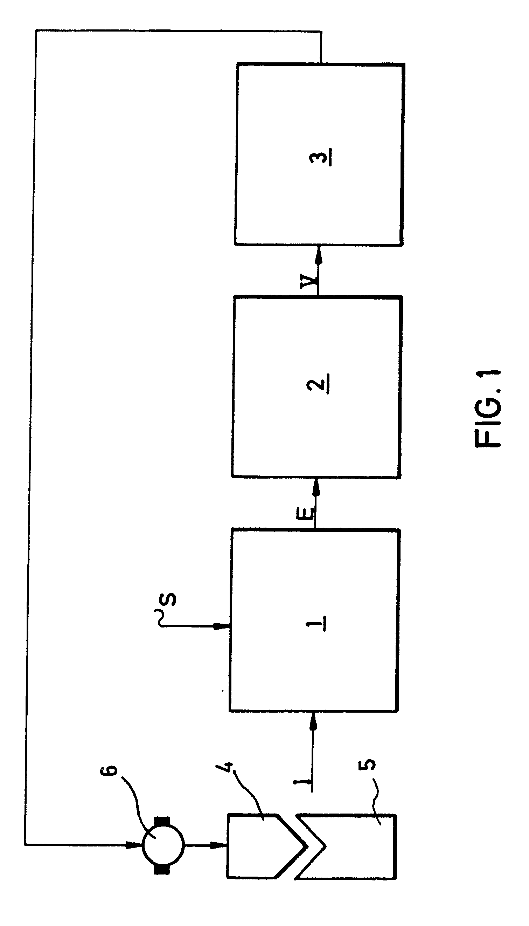

Wie in Fig. 1 gezeigt ist, beinhaltet der Regelkreis der erfindungsgemäßen Servosteuervorrichtung eine durch einen Differenzverstärker 1 gebildete Einrichtung zum Berechnen eines Fehlersignales E aufgrund eines eine Ist-Entfernung zwischen einer Erosionselektrode 4 und einem Werkstück 5 darstellenden Signales I und eines eine Soll-Entfernung darstellenden Signales S. Das Fehlersignal E wird einem Rechner 2 zugeführt, der einerseits eine digitale Tiefpaßfilterung des Fehlersignales E durchführt und andererseits das so gefilterte Signal über eine bestimmte, tabellenmäßige Zuordnung in ein Steuersignal V umrechnet, das seinerseits einer Treiberschaltung 3 für einen Antriebsmotor 6 zum Bewegen der die Erosionselektrode 4 tragenden Pinole zugeführt wird.

Der Rechner führt eine einfache Tiefpaßfilterung erster Ordnung mit veränderlicher Grenzfrequenz mittels folgender Formel durch :

$$A(k) = T/(T + 2A) \times (E(k) + E(k - 1)) + (2A - T)/(2A + T) \times A(k - 1)$$

Bei dieser Formel haben die in der Formel angegebenen Werte folgenden Inhalt :
T bezeichnet die Abtastzeit ;
$A = 1/2 \text{ pi} \times FG$ ;
$\text{pi} = 3,1415...$ ;
FG bezeichnet die Grenzfrequenz des Tiefpaßfilters ;
A(k) ist der neue Filterausgangswert ;
A(k − 1) ist der alte Filterausgangswert ;
E(k) ist der neue Filtereingangswert ; und
E(k − 1) ist der alte Filtereingangswert.

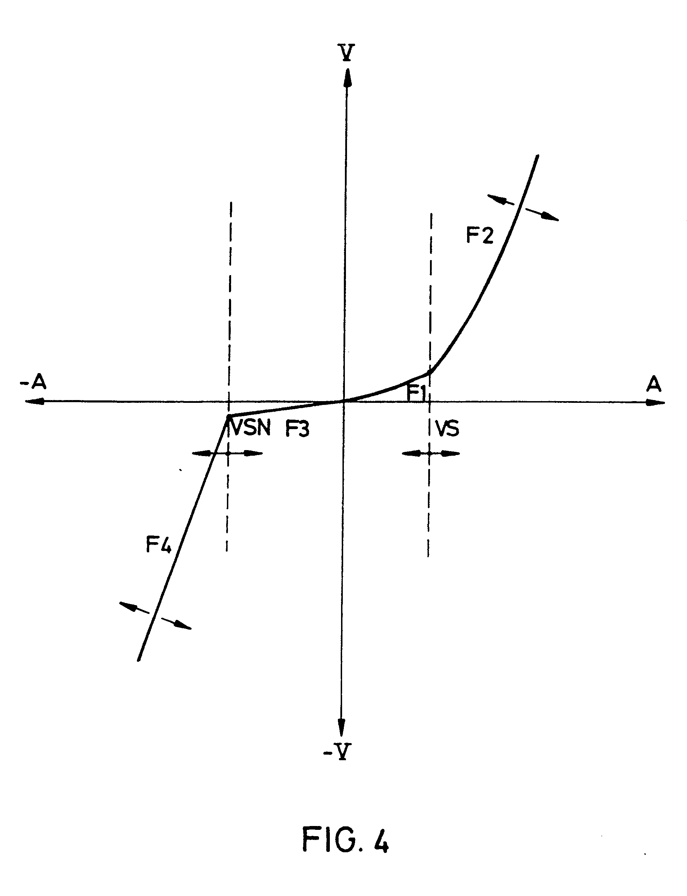

Die Grenzfrequenz dieses digitalen Tiefpaßfilters kann durch Variation des Parameters A geändert werden. Die Filterausgangswerte A(k) werden vom Rechner 2 mittels einer Tabelle, die unter Bezugnahme auf Fig. 4 erläutert werden wird, in das Steuersignal V umgerechnet.

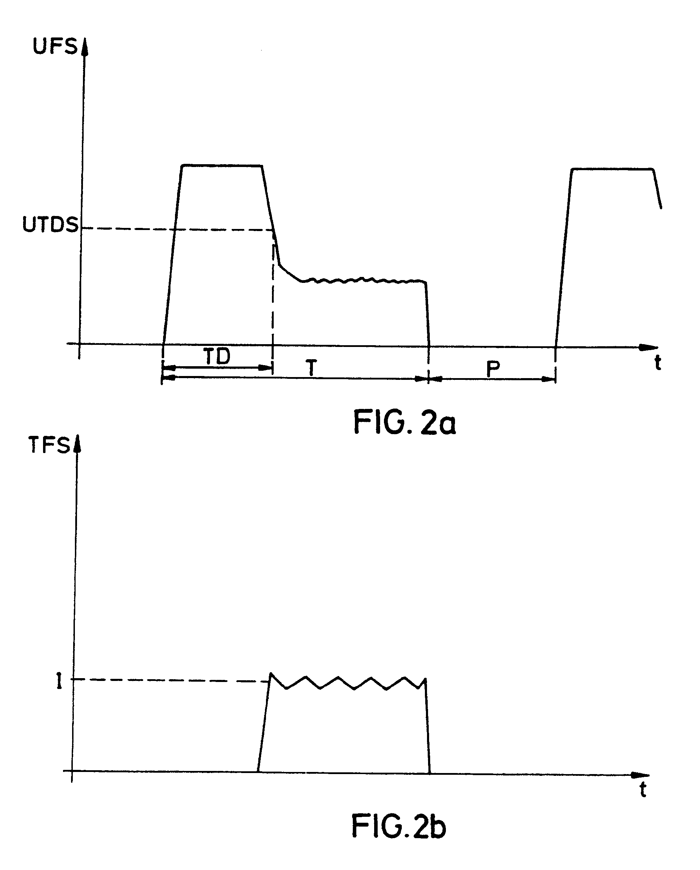

Fig. 2a zeigt den Verlauf der Erosionsstreckenspannung bzw. Funkenstreckenspannung UVS in Abhängigkeit von der Zeit t, während Fig. 2b den Funktenstreckenstrom IFS in Abhängigkeit von der Zeit t darstellt. Die Funkenstrekkenspannung führt nach Ablauf der Zündverzögerungszeit TD zu einem Erosionsstrom. Der Wert UTDS entspricht der Schwellenspannung für die Berechnung der Zündverzögerunszeit TD. Nach Ablauf der Pulsdauer T wird die Funkenstreckenspannung UFS auf Null reduziert. Entsprechend fällt zu diesem Zeitpunkt der Funkenstreckenstrom IFS auf Null. Vor dem Anlegen der nächsten pulsförmigen Funkenstreckenspannung UFS erfolgt eine Pause mit der Pausendauer P. Der Mittelwert des Funkenstreckenstromes ist mit dem Bezugszeichen I bezeichnet.

Die Bearbeitungsfrequenz ergibt sich aus dem Kehrwert der Summe der Pulsdauer T sowie der Pausendauer P.

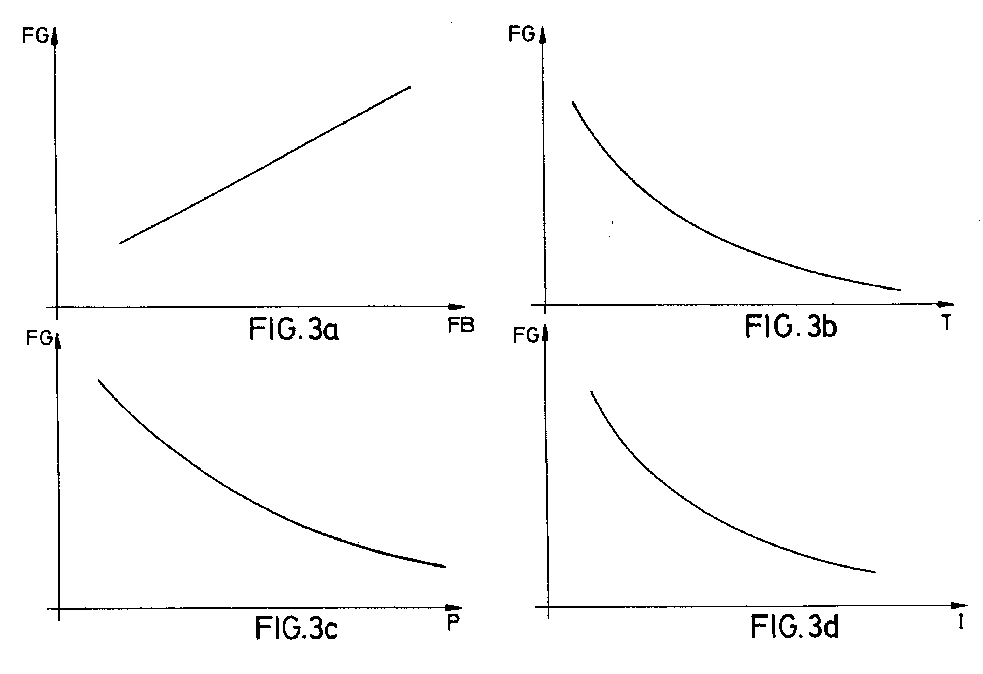

Die Fig. 3a bis 3d zeigen mögliche Abhängigkeiten der Grenzfrequenz FG von der Bearbeitungsfrequenz SB (Fig. 3a), von der Pulsdauer T (Fig. 3b), von der Pausendauer P (Fig. 3c) sowie von dem mittleren Funkenstreckenstrom I (Fig. 3d).

Der Rechner 2 enthält eine Festwerttabelle für eine oder mehrere der in den Fig. 3a bis 3d gezeigten Abhängigkeiten, um aus bekannten Prozeßparametern FB, T, P, I die gesuchte Grenzfrequenz FG für die Tiefpaßfilterfunktion zu errechnen.

Der sich durch die digitale Tiefpaßfilterung ergebende Filterausgangswert A wird einer weiteren Tabelle zum Durchführen einer Zuordnung dieses Wertes zu einem entsprechenden Steuersignal V für die Treiberschaltung 3 zugeführt. Eine solche Tabelle ist in der Fig. 4 dargestellt. Die in der Fig. 4 gezeigte Zuordnungstabelle besteht aus vier Teilfunktionen F1 bis F4, von denen die Funktionen F1, F3, die durch die positiven und negativen Schwellwerte VS, VSN begrenzt sind, eine niedrige Steigung haben und von denen die Funktionen F2, F4 jeweils außerhalb dieser Schwellwerte eine hohe Steigung haben.

Bei einer hohen Regelabweichung, die zu einem großen Wert A am Ausgang des digitalen Tiefpaßfilters führt, muß die Servosteuervorrichtung schnell reagieren und die Erosionselektrode in Richtung auf das Werkstück bewegen, da in diesem Fall die Funkenstrecke zu lang ist. Die niedrige Steigung zwischen den positiven und negativen Schwellwerten VS, VSN bewirkt eine langsame, stabile Regelung in dem Bereich nahe eines optimalen Erosionszustandes. Wenn der Filterausgangswert unterhalb des negativen Schwellwertes VSN liegt, was eine zu kurze Funkenstrecke anzeigt, so wird durch die hohe Steigung des Kurventeiles F4 ein schnelles Rückziehen der Erosionselektrode zum Verhindern einer Werkstückberührung durchgeführt.

Die Servobewegungen sind, verglichen mit der Bearbeitungsfrequenz FB, sehr langsam und liegen um den Faktor 10 bis 1000 unter den für die Bearbeitungsfrequenz typischen Werten. Somit kann allein durch die Servobewegung eine Prozeßstabilisierung nicht vollständig erreicht werden. Zur vollständigen Prozeßstabilisierung bedarf es der Beeinflussung der elektrischen Parameter des Bearbeitungspulses.

Wenn sich die Erosionselektrode 4 und das Werkstück 5 in einer annähernd optimalen gegenseitigen Lage befinden, werden durch das erfindungsgemäße Servosteuersystem keine unnötigen Bewegungen ausgeführt. In diesem Fall werden die Schwellwerte VS und VSN vergrößert. Dies bedeutet, daß das Servosteuersystem an der Grenze seiner Leistung angelangt ist.

Diese Information wird als Gütekriterium zum Ansprechen von schnellen Optimierungsmaßnahmen genutzt. Wenn die Schwellwerte VS, VSN groß sind, bedeutet dies, daß entweder der Prozeß an sich instabil ist, weil beispielsweise die mittlere Erosionsfunkenstrecke zu niedrig ist, oder daß die Spülung schlecht ist, oder daß die Bearbeitungsfläche zu starke Veränderungen aufweist.

In diesem Fall kann eine schnelle Pinolenrückzugbewegung ausgelöst werden, oder die Pausendauer P der Bearbeitungspulse vergrößert werden, oder die Stromamplitude I geändert werden, oder die Stromimpulse unterdrückt werden, oder es können an sich bekannte Maßnahmen getroffen werden.

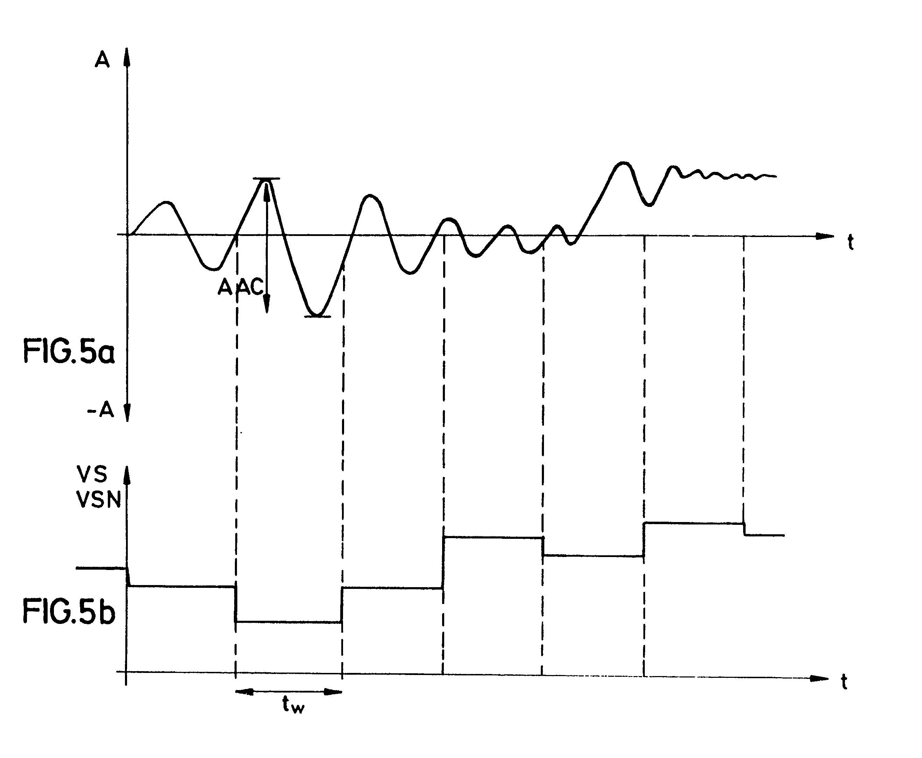

Anhand der Fig. 5a, 5b wird nun die Anpassung der Schwellwerte VS, VSN zur Minimierung der Wechselanteile AAC beschrieben.

Die Schwellwerte VS, VSN werden in Zeitabständen TW neu berechnet und kontinuierlich dem momentanen Prozeß derart angepaßt, daß der Wechselanteil des gefilterten Fehlersignales AAC minimal gehalten wird. Diese Anpassung wird vorzugsweise durch eine Softwareroutine realisiert, könnte aber auch in Digitaltechnik realisiert werden.

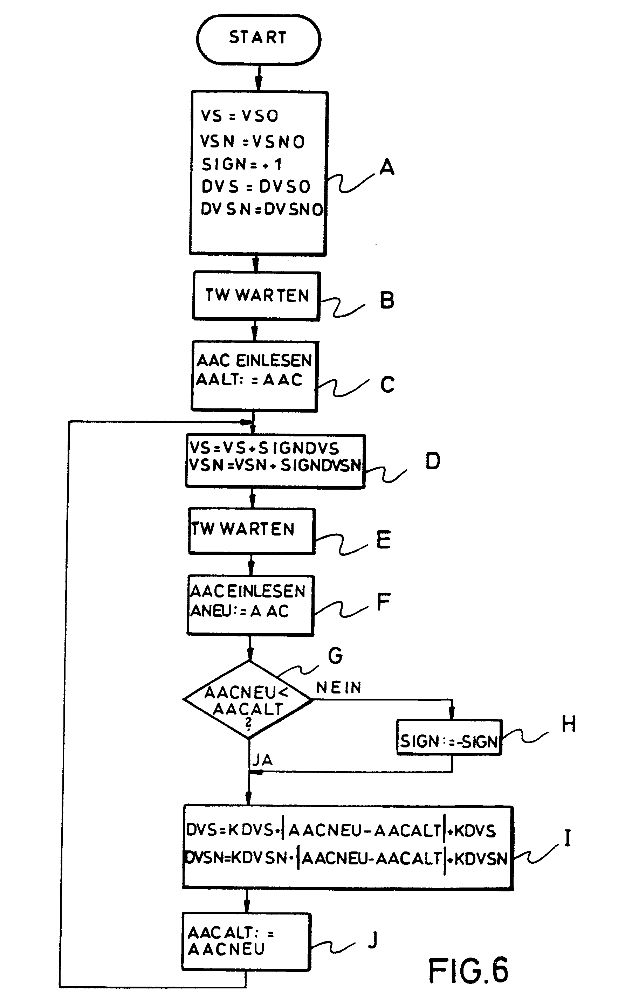

Fig. 6 zeigt ein Flußdiagramm eines Algorithmus, der diese Optimierung der Schwellwerte VS, VSN durchführt.

In einem ersten Verfahrensschritt A werden die Schwellwerte VS, VSN auf Anfangswerte VSO, VSNO gesetzt, das Vorzeichen SIGN auf + 1 gesetzt, die Schrittweiten der Schwellwerte DVS, DVSN auf Anfangswerte DVSO, DVSNO gesetzt. Im nächsten Schritt verstreicht die Zeitspanne TW zwischen zwei Messungen.

Im nächsten Schritt C wird der Wechselanteil AAC des gefilterten Fehlersignales A eingelesen. Hierbei wird der alte Wert des Wechselanteiles erneuert.

Im nächsten Schritt wird der Schwellwert um die Vorzeichenfunktion der Schrittweite sowohl für den positiven Schwellwert VS wie auch für den negativen Schwellwert VSN erhöht. Nach Ablauf der Zeitspanne TW im Schritt E wird erneut der Wechselanteil AAC eingelesen und als neuer Wechselanteilwert ANEU gespeichert. Im Schritt G wird der neue Wert des Wechselanteils mit dem alten Wert des Wechselanteils verglichen. Falls der neue Wert größer ist, wird die Signumfunktion durch die negative Signumfunktion im Schritt H ersetzt, anderenfalls wird direkt im Schritt I weitergearbeitet, indem die Schrittweiten aus dem Produkt von Proportionalitätskoeffizienten KDVS, KDVSN mit dem Absolutwert der Differenzen vorheriger und neuer Wechselanteile AACNEU, AACALT und der Summe der Proportionalitätskoeffizienten berechnet werden.

Anschließend wird im Verfahrensschritt J der vorige Wert des Wechselanteils AACALT durch den Wert AACNEU ersetzt und somit aktualisiert. Der Algorithmus fährt beim Verfahrensschritt D fort.

Mit anderen Worten beginnt man bei der Bearbeitung der Schwellwerte mit Erfahrungswerten, berechnet nach einer Zeitspanne einen Wechselanteil, ändert Schwellwerte in die positive Richtung, berechnet erneut den Wechselanteil, vergleicht diesen mit dem vorherigen. Wenn der neue Wert kleiner ist als der alte, verändert man die Schwellen in die gleiche Richtung. Ist der neue Wert größer, ändert man die Schwellen in der umgekehrten Richtung.

Dieser Algorithmus kann auch zur Anpassung der Steigung der Funktionen F2 und F4 verwendet werden.

Beschriftung der Fig.6

START

VS=VSO

VSN=VSNO

SIGN=+1                     A

DVS=DVSO

DVSN=DVSNO

TW Warten                   B

AAC Einlesen
                            C
AALT:=AAC

VS=VS+SIGNDVS
                            D
VSN=VSN+SIGNDVSN

TW Warten                   E

AAC Einlesen
                            F
ANEU:=AAC

AACNEU $<$ AACALT ?   N

SIGN:= -SIGN                H

DVS=KDVS·|AACNEU-AACALT|+KDVS
                                        I
DVSN=KDVSN·|AACNEU-AACALT|+KDVSN

AACALT:=AACNEU      J

## BEZUGSZEICHENLISTE

| | |
|---|---|
| 1 | Differenzverstärker |
| 2 | Tiefpaßfilterschaltung |
| 3 | Treiberschaltung |
| 4 | Erosionselektrode |
| 5 | Werkstück |
| 6 | Antriebsmotor |

## Patentansprüche

1. Servosteuereinrichtung für eine Erosionsmaschine zum Regeln der Lage einer Erosionselektrode (4) bezüglich eines Werkstückes (5) mit einer Einrichtung zum Bestimmen der Ist-Entfernung zwischen der Erosionselektrode (4) und dem Werkstück (5), mit einer Einrichtung (1) zum Berechnen eines Fehlersignales (E) aufgrund der Differenz zwischen der Ist-Entfernung (I) und einer Soll-Entfernung (S), mit einer Tiefpaßfilterschaltung (2), der das Fehlersignal (E) zugeführt wird und die ein Steuersignal (V) erzeugt, und mit einer Antriebseinrichtung (6) zum Nachführen der Erosionselektrode (4) aufgrund des Steuersignales (V), dadurch gekennzeichnet, daß die Tiefpaßfilterschaltung (2) eine einstellbare Grenzfrequenz hat, und daß die Grenzfrequenz von wenigstens einem Parameter eines der Erosionselektrode (4) zugeführten Bearbeitungspulses abhängt.

2. Servosteuervorrichtung nach Anspruch 1, dadurch gekennzeichnet, daß die Einrichtung zum Bestimmen der Entfernung die Erosionsspannung ermittelt und aufgrund der Erosionsspannung ein die Entfernung anzeigendes Signal erzeugt.

3. Servosteuervorrichtung nach Anspruch 1 oder 2, dadurch gekennzeichnet, daß die Grenzfrequenz von der Bearbeitungsfrequenz abhängt.

4. Servosteuervorrichtung nach einem der Ansprüche 1 bis 3, dadurch gekennzeichnet, daß die Grenzfrequenz von der Pulsdauer des Bearbeitungspulses abhängt.

5. Servosteuervorrichtung nach einem der Ansprüche 1 bis 4, dadurch gekennzeichnet, daß die Grenzfrequenz von der Pausendauer des Bearbeitungspulses abhängt.

6. Servosteuervorrichtung nach einem der Ansprüche 1 bis 5, dadurch gekennzeichnet, daß die Grenzfrequenz von der Stromamplitude des Bearbeitungspulses abhängt.

7. Servosteuervorrichtung nach einem der Ansprüche 1 bis 6, dadurch gekennzeichnet, daß eine Zuordnungsschaltung (2) vorgesehen ist, die jedem Wert des gefilterten Fehlersignales ein Steuersignal zuordnet und daß diese Zuordnung nichtlinear ist.

8. Servosteuervorrichtung nach Anspruch 7, dadurch gekennzeichnet, daß für die Zuordnung bei Werten des gefilterten Fehlersignales, die kleiner als ein Schwellwert (VS) sind, eine erste Umwandlungsfunktion (F1) verwendet wird, und daß für die Zuordnung bei Werten des gefilterten Fehlersignales, die größer als der Schwellwert (VS) sind, eine zweite Umwandlungsfunktion (F2) verwendet wird.

9. Servosteuervorrichtung nach einem der Ansprüche 1 bis 8, dadurch gekennzeichnet, daß der Schwellwert (VS) mittels eines Suchalgorithmus in der Weise bestimmt wird, daß der Wechselanteil des Fehlersignales minimal gehalten wird.

10. Servosteuervorrichtung nach Anspruch 9, dadurch gekennzeichnet, daß die Steigung der Funktion (F2) mittels eines Suchalgorithmus in der Weise bestimmt wird, daß der Wechselanteil des Fehlersignales minimal gehalten wird.

11. Servosteuervorrichtung nach einem der Ansprüche 8 bis 10, dadurch gekennzeichnet, daß für die Zuordnung bei Werten des gefilterten Fehlersignales, die kleiner als Null aber größer als ein negativer Schwellwert (VSN) sind, eine dritte Umwandlungsfunktion (F3) verwendet wird, und daß für die Zuordnung bei Werten des gefilterten Fehlersignales, die kleiner als der negative Schwellwert (VSN) sind, eine vierte Umwandlungsfunktion (F4) verwendet wird.

12. Servosteuervorrichtung nach einem der Ansprüche 8 bis 11, dadurch gekennzeichnet, daß der Schwellwert (VSN) mittels eines Suchalgorithmus in der Weise bestimmt wird, daß der Wechselanteil des Fehlersignales minimal gehalten wird.

13. Servosteuervorrichtung nach Anspruch 11 oder 12, dadurch gekennzeichnet, daß die Schwellwerte (VS und VSN) zum Anpassen der elektrischen Parameter der Bearbeitungspulse verwendet werden.

14. Servosteuervorrichtung nach einem der Ansprüche 11 bis 13, dadurch gekennzeichnet, daß die Steigung der Funktion (F4) mittels eines Suchalgorithmus in der Weise bestimmt wird, daß der Wechselanteil des Fehlersignals minimal gehalten wird.

15. Servosteuervorrichtung nach einem der Ansprüche 7 bis 14, dadurch gekennzeichnet, daß die Schaltung (2) aus einem programmierbaren Rechner besteht.

16. Servosteuervorrichtung nach einem der Ansprüche 7 bis 15, dadurch gekennzeichnet, daß die Schaltung (2) aus einem digitalen Signalprozessor besteht.

## Claims

1. Servo control for an erosion machine for regulating the position of the erosion electrode (4) with respect to a workpiece (5), having an apparatus for determining the actual distance between the erosion electrode (4) and the workpiece (5), having an apparatus (1) for calculating an error signal (E) from the difference between the actual distance (I) and a set distance (S), having a lowpass filter circuit (2) to which the error signal (E) is fed and which generates a control signal (V), and having a drive apparatus (6) for follow-up guiding of the erosion electrode (4) on the basis of the control signal (V), characterized in that the lowpass filter circuit (2) has a settable cut-off frequency, and in that the cut-off frequency depends on at least one parameter of a machining pulse fed to the erosion electrode (4).

2. Servo control according to Claim 1, characterized in that the apparatus for determining the distance detects the erosion voltage and on the basis of the erosion voltage generates a signal displaying the distance.

3. Servo control according to Claim 1 or 2, characterized in that the cut-off frequency depends on the machining frequency.

4. Servo control according to one of Claims 1 to 3, characterized in that the cut-off frequency depends on the pulse duration of the machining pulse.

5. Servo control according to one of Claims 1 to 4, characterized in that the cut-off frequency depends on the interval duration between machining pulses.

6. Servo control according to one of Claims 1 to 5, characterized in that the cut-off frequency depends on the current amplitude of the machining pulse.

7. Servo control according to one of Claims 1 to 6, characterized in that an assignment circuit (2) is provided which assigns to each value of the filtered error signal a control signal, and in that this assignment is non-linear.

8. Servo control according to Claim 7, characterized in that for assignment with values of the filtered error signal which are smaller than a threshold value (VS) a first transfer function (F1) is used, and in that for assignment with values of the filtered error signal which are greater than the threshold value (VS) a second transfer function (F2) is used.

9. Servo control according to one of Claims 1 to 8, characterized in that the threshold value (VS) is determined by means of a search algorithm in such a way that the varying portion of the error signal is kept to a minimum.

10. Servo control according to Claim 9, characterized in that the gradient of the function (F2) is determined by means of a search algorithm in such a way that the varying portion of the error signal is kept to a minimum.

11. Servo control according to one of Claims 8 to 10, characterized in that for assignment with values of the filtered error signal which are smaller than zero or greater than a negative threshold value (VSN) a third transfer function (F3) is used, and in that for assignment with values of the filtered error signal which are smaller than the negative threshold value (VSN) a fourth transfer function (F4) is used.

12. Servo control according to one of Claims 8 to 11, characterized in that the threshold value (VSN) is determined by means of a search algorithm in such a way that the varying portion of the error signal is kept to a minimum.

13. Servo control according to Claim 11 or 12, characterized in that the threshold values (VS and VSN) are used to match the electrical parameters of the machining pulses.

14. Servo control according to one of Claims 11 to 13, characterized in that the gradient of the function (F4) is determined by means of a search algorithm in such a way that the varying portion of the error signal is kept to a minimum.

15. Servo control according to one of Claims 7 to 14, characterized in that the circuit (2) comprises a programmable computer.

16. Servo control according to one of Claims 7 to 15, characterized in that the circuit (2) comprises a digital signal processor.

## Revendications

1. Dispositif de servo-commande pour machine d'électro-érosion, destiné au réglage de la position d'une électrode d'électro-érosion (4) par rapport à une pièce à usiner (5), comportant un dispositif destiné à déterminer quelle est la distance réelle entre l'électrode d'électroérosion (4) et la pièce à usiner (5), comportant un dispositif (1) destiné au calcul d'un signal d'erreur (E) sur la base de la différence entre la distance réelle (I) et une distance nominale (S), comportant un circuit (2) formant filtre passe-bas dans lequel est introduit le signal d'erreur (E) et qui produit un signal de commande (V) ainsi qu'un dispositif d'entraînement (6) destiné à corriger la position de l'électrode d'électro-érosion (4) sur la base du signal de commande, caractérisé en ce que le circuit formant filtre passe-bas (2) a une fréquence limite réglable, et en ce que la fréquence limite est fonction d'au- moins un paramètre de l'impulsion d'usinage fournie à l'électrode d'électro-érosion.

2. Dispositif de servo-commande selon la revendication 1, caractérisé en ce que le dispositif destiné à déterminer quelle est la distance établit quelle est la tension d'érosion et produit un signal indiquant la distance, sur la base de la tension d'érosion.

3. Dispositif de servo-commande selon la revendication 1 ou 2, caractérisé en ce que la fréquence limite est fonction de la fréquence d'usinage.

4. Dispositif de servo-commande selon l'une des revendications 1 à 3, caractérisé en ce que la fréquence limite est fonction de la durée d'impulsion de l'impulsion d'usinage.

5. Dispositif de servo-commande selon l'une des revendications 1 à 4, caractérisé en ce que la fréquence limite est fonction de la durée de pause de l'impulsion d'usinage.

6. Dispositif de servo-commande selon l'une des revendications 1 à 5, caractérisé en ce que la fréquence limite est fonction de l'amplitude du courant de l'impulsion d'usinage.

7. Dispositif de servo-commande selon l'une des revendications 1 à 6, caractérisé en ce que un circuit d'affectation (2) est prévu, lequel affecte à chaque valeur du signal d'erreur filtré un signal de commande et en ce que cette affectation n'est pas linéaire.

8. Dispositif de servo-commande selon la revendication 7, caractérisé en ce que pour l'affectation, dans le cas où les valeurs du signal d'erreur filtré sont inférieures à une valeur de seuil (VS), on utilise une première fonction de conversion (F1) et en ce que pour l'affectation, dans le cas où les valeurs de signal d'erreur filtré sont supérieures à la valeur de seuil (VS), on utilise une seconde fonction de conversion (F2).

9. Dispositif de servo-commande selon l'une des revendications 1 à 8, caractérisé en ce que la valeur de seuil (VS) est déterminée au moyen d'un algorithme de recherche, de façon à maintenir à un niveau minimum les variations du signal d'erreur.

10. Dispositif de servo-commande selon la revendication 9, caractérisé en ce que la pente de la fonction (F2) est déterminée au moyen d'un algorithme de recherche, de façon à maintenir à un niveau minimum les variations du signal d'erreur.

11. Dispositif de servo-commande selon l'une des revendications 8 à 10, caractérisé en ce que, dans le cas où les valeurs du signal filtré sont négatives mais supérieures à une valeur de seuil négative (VSN), on utilise une troisième fonction de conversion (F3) et en ce que pour l'affectation, dans le cas où les valeurs du signal d'erreur filtré sont inférieures à la valeur de seuil négative (VSN), on utilise une quatrième fonction de conversion (F4).

12. Dispositif de servo-commande selon l'une des revendications 8 à 11, caractérisé en ce que la valeur de seuil (VSN) est déterminée au moyen d'un algorithme de recherche de façon à maintenir à un niveau minimum les variations du signal d'erreur soit maintenue à un minimum.

13. Dispositif de servo-commande selon l'une des revendications 11 ou 12, caractérisé en ce que les valeurs de seuil (VS et VSN) sont utilisées pour l'adaptation des paramètres électriques de l'impulsion d'usinage.

14. Dispositif de servo-commande selon l'une des revendications 11 à 13, caractérisé en ce que la pente de la fonction (F4) est déterminée au moyen d'un algorithme de recherche, de façon à maintenir à un niveau minimum les variations du signal d'erreur.

15. Dispositif de servo-commande selon l'une des revendications 7 à 14, caractérisé en ce que le circuit (2) est constitué par un calculateur programmable.

16. Dispositif de servo-commande selon l'une des revendications 7 à 15, caractérisé en ce que le circuit est constitué par un dispositif de traitement numérique de signal.

FIG. 1

FIG. 2a

FIG.2b

FIG.3a

FIG.3b

FIG.3c

FIG.3d

EP 0 333 170 B1

FIG. 4

FIG.5a

FIG.5b

EP 0 333 170 B1

START

VS = VSO
VSN = VSNO
SIGN = +1
DVS = DVSO
DVSN = DVSNO

A

TW WARTEN

B

AAC EINLESEN
AALT: = AAC

C

VS = VS + SIGNDVS
VSN = VSN + SIGNDVSN

D

TW WARTEN

E

AAC EINLESEN
ANEU: = AAC

F

G

AACNEU <
AACALT
?

NEIN

SIGN: = -SIGN

H

JA

DVS = KDVS · |AACNEU - AACALT| + KDVS
DVSN = KDVSN · |AACNEU - AACALT| + KDVSN

I

AACALT: =
AACNEU

J

FIG.6